# EUROPÄISCHE PATENTSCHRIFT

(11) **EP 2 534 318 B1**
(45) Veröffentlichungstag und Bekanntmachung des Hinweises auf die Patenterteilung: **10.05.2017**
(21) Anmeldenummer: 10748069.1
(22) Anmeldetag: 03.08.2010
(51) Int. Cl.: E04B 1/84, E04B 5/48, F24D 3/14, F24F 5/00

(54) **BAUKÖRPER MIT EINGEFÜHRTEM AKUSTIKKÖRPER**
STRUCTURE HAVING AN INTRODUCED ACOUSTIC ELEMENT
MODULE DE CONSTRUCTION A COMPOSANT ACOUSTIQUE INCORPORE

(30) Priorität: 16.05.2010 DE 102010025445; 13.02.2010 DE 102010008029
(43) Veröffentlichungstag der Anmeldung: 19.12.2012
(73) Patentinhaber: Klimatop GmbH, 87700 Memmingen (DE); Hoppe, Christian, 99092 Erfurt (DE)
(72) Erfinder: HOPPE, Christian, 99092 Erfurt (DE); BÜHLER, Armin, 87733 Markt Rettenbach (DE)
(74) Vertreter: Engel, Christoph Klaus
(86) Internationale Anmeldenummer: PCT/EP2010/061306
(87) Internationale Veröffentlichungsnummer: WO 2011/098156

(56) Entgegenhaltungen:
- EP-A1- 1 302 604
- CH-A- 269 100
- DE-B3-102007 007 290
- FR-A- 1 103 660

## Beschreibung

Die vorliegende Erfindung betrifft einen Baukörper zur Umschließung eines Raumes, in welchen ein Akustikkörper zur Beeinflussung der akustischen Eigenschaften des zu umschließenden Raumes eingeführt ist. Folglich betrifft die Erfindung alle Umschließungsflächen eines Raumes und sie hat u. a. die Optimierung der akustischen Eigenschaften des zu umschließenden Raumes zum Ziel.

Die Optimierung der akustischen Eigenschaften von Räumen erfolgt bekanntermaßen durch eine Veränderung der Absorptions-, Diffusions- und Reflektionseigenschaften der Raumumschließungsflächen. Die Absorption von mittleren und hohen Frequenzen des Schalls wird zumeist durch die Verwendung von porösen Materialien erreicht, welche in unterschiedlichen Konstruktionen verbaut sind. Beispielsweise werden herabgehängte Decken aus geeigneten Werkstoffen verwendet, welche jedoch zu einem Verlust an nutzbarem Raumvolumen und zu erheblichen Kosten führen. Die herabgehängten Decken haben weiterhin den Nachteil, dass die Verwendung von Heiz- und Kühlsystemen, welche in die obere Decke integriert sind, erschwert wird.

Die DE 103 28 734 A1 zeigt eine Vorrichtung zur Temperierung von Bauteilen, beispielsweise in Form einer so genannten thermisch aktivierten Decke. Die Aktivierung des Bauteiles erfolgt dadurch, dass wasserdurchströmte Rohrleitungen in dem Bauteil angeordnet werden. Je nach Vorlauftemperatur des Wassers ist damit eine Kühlung oder eine Erwärmung des vom Bauteil umschlossenen Gebäudes möglich. Bei Fertigteildecken mit Hohlräumen, insbesondere bei Spannbeton-Hohldielen ist es aus konstruktiven Gründen anzustreben, die Rohrleitungen in die vorhandenen Hohlräume einzuziehen. Zwischen der Hohldiele und einem darüber befindlichen Estrich ist eine Dämmstoffschicht angeordnet. Diese Lösung dient nicht der Verbesserung raumakustischer Eigenschaften

Aus der DE 10 2007 007 290 B3 ist ein flächenförmiges Akustik-, Kühl- und Heizelement bekannt, welches gleichzeitig zur Schallabsorption sowie zum Kühlen und Heizen von Räumen dient. In diesem Element ist eine flächenförmige und zugleich selbsttragende Schicht ausgebildet, welche als Dämmmatte fungiert und eine Vielzahl von parallel verlaufenden Nuten zur Aufnahme von Leitungen aufweist. Das Element umfasst auf der in den zu temperierenden Raum zu richtenden Seite eine relativ dünne Abstrahlschicht aus Vlies. Die Nuten sind zur Erhöhung der Kühl- und Heizeffizienz mit einem Wasserglas beschichtet. Ein Nachteil dieser Lösung besteht in der geringen erzielbaren mechanischen Stabilität des Elementes.

Die DE 20 2009 011 329 U1 zeigt ein Deckenelement zum Heizen und/oder Kühlen, welches ein Plattenelement und eine von einem Wärmemedium durchströmbare Rohranordnung umfasst. Die aus der Rohranordnung und dem Plattenelement gebildete Wärmeeinheit wird von einer Schallabsorptionseinrichtung umgeben. Nachteilig an dieser Lösung sind die zu erwarteten thermischen Verluste, da die Wärme in alle Richtungen übertragen wird.

Die FR 1 103 660 A zeigt einen Baukörper mit einem Grundkörper, einem Raumklimasystem und einem Wärmedämmelement. Das beschriebene System zielt nicht auf eine Verbesserung der akustischen Eigenschaften des zu umschließenden Raumes.

Die CH 269100 A beinhaltet eine zur Flächenheizung eingerichtete Decke.

Die Aufgabe der vorliegenden Erfindung besteht ausgehend vom Stand der Technik darin, einen Baukörper, beispielsweise für ein Wand-, Decken- oder Fußbodensystem bereitzustellen, welcher als thermisch aktives Element gleichzeitig die Verbesserung akustischer Eigenschaften des zu umschließenden Raumes bewirkt, ohne dass hierfür ein entsprechender Unter- oder Vorbau erforderlich ist.

Die genannte Aufgabe wird durch einen Baukörper gemäß dem beigefügtem Anspruch 1 gelöst.

Der erfindungsgemäße Baukörper dient der Umschließung eines Raumes, beispielsweise eines Raumes oder Zimmers eines Wohn- oder Bürogebäudes oder einer Werkhalle. Der erfindungsgemäße Baukörper stellt insbesondere ein Teil oder ein Ganzes einer Wand, einer Decke oder eines Fußbodens dar. Folglich kann der Baukörper beispielsweise in Form eines Decken- oder Wandelementes oder auch eines Ziegels oder eines Mauersteines ausgebildet sein.

Der erfindungsgemäße Baukörper umfasst zunächst einen Grundkörper zur Ausbildung einer räumlichen Begrenzung. Der Grundkörper gewährleistet die Statik des Baukörpers und ist beispielsweise in Form einer Platte oder eines Betonteils ausgebildet. Im Grundkörper ist ein Raumklimasystem zum Heizen und/oder Kühlen des zu umschließenden Raumes angeordnet. Bei dem Raumklimasystem handelt es sich beispielsweise um ein Heizsystem oder um ein Kühlsystem oder auch um ein kombiniertes Heiz-/Kühlsystem. In dem Grundkörper sind insbesondere wärmeübertragende Teile des Raumklimasystems angeordnet, beispielsweise Rohre, durch welche ein kühlbares oder erwärmbares Medium fließen/strömen kann. Im Grundkörper ist weiterhin mindestens ein Wärmedämmelement angeordnet, welches dazu dient, dass die vom Raumklimasystem übertragene Wärme überwiegend in den zu umschließenden Raum transportiert wird, indem es verhindert, dass die übertragene Wärme in Richtung der dem zu umschließenden Raum abgewandten Seite des Baukörpers geleitet wird. Daher befindet sich das Raumklimasystem zwischen dem Wärmedämmelement und dem zu umschließenden Raum, wobei diese Anordnung in Bezug auf die Wärmeübertragung im Baukörper zu verstehen ist. Das Wärmedämmelement zeichnet sich dadurch aus, dass es Wärme nur geringfügig leitet, wofür es ein weniger wärmeleitendes Material als der Grundkörper aufweist. Das Wärmedämmelement kann aus einem speziellen Wärmedämmstoff bestehen oder auch aus Luft oder Vakuum in einem Hohlraum gebildet sein.

Der erfindungsgemäße Baukörper umfasst weiterhin mindestens einen Akustikkörper zur Beeinflussung der akustischen Eigenschaften des zu umschließenden Raumes. Der Akustikkörper besteht aus einem Material durch welches die Nachhallzeit in dem zu umschließenden Raum verringert wird. Der in eine Aussparung im Grundkörper eingeführte Akustikkörper ist bevorzugt als eigenständiges Gebilde ausgebildet, wobei er bevorzugt oberflächenbündig mit der Aussparung abschließt. Die Anordnung des einen oder der mehreren Akustikkörper in der einen bzw. in den mehreren Aussparungen im Grundkörper führt dazu, dass das zu nutzende Volumen des zu umschließenden Raumes, insbesondere die Raumhöhe nicht verringert werden muss. Es besteht aber auch die Möglichkeit, den Akustikkörper aus der Aussparung im Grundkörper herausragen zu lassen. Der eine oder die mehreren Akustikkörper bedecken einen Anteil der den zu umschließenden Raum zuzuwendenden Fläche des Baukörpers, wobei dieser Anteil bevorzugt mehr als 30%, besonders bevorzugt mehr als 70% beträgt. Erfindungsgemäß ist das eine oder die mehreren Wärmedämmelemente gegenüber dem zu umschließenden Raum akustisch wirksam, wobei diese akustische Wirksamkeit über den Weg des Akustikkörpers erzielt wird. Es besteht somit eine akustische Kopplung des Wärmedämmelementes mit dem zu umschließenden Raum über den Akustikkörper. Folglich werden die akustischen Eigenschaften des zu umschließenden Raumes nicht nur durch den einen oder die mehreren Akustikkörper des erfindungsgemäßen Baukörpers beeinflusst, sondern auch über das eine oder die mehreren Wärmedämmelemente des erfindungsgemäßen Baukörpers. Dadurch fungiert das Wärmedämmelement nicht nur als solches, sondern auch als Element zur Verbesserung der akustischen Eigenschaften des zu umschließenden Raumes. Dies ist in vielen Fällen ohne erhöhten Aufwand für die Bereitstellung der Wärmedämmelemente verbunden, da viele für Wärmedämmelemente verwendete Materialien bereits über Eigenschaften verfügen, welche sie als Material zur Verbesserung der akustischen Eigenschaften von Räumen qualifizieren. Um das eine oder die mehreren Wärmedämmelemente über den einen oder die mehreren Akustikkörper gegenüber dem zu umschließenden Raum akustisch wirksam werden zu lassen, sind die Wärmedämmelemente und die Akustikkörper akustisch zu koppeln, beispielsweise dadurch, dass sich die Wärmedämmelemente und die Akustikkörper jeweils berühren.

Bei einer bevorzugten Ausführungsform des erfindungsgemäßen Baukörpers besteht das eine oder die mehreren Wärmedämmelemente aus einem Wärmedämmstoff. Derartige Wärmedämmstoffe besitzen eine niedrige spezifische Wärmeleitfähigkeit von weniger als 0,1 W/(m·K). Als Wärmedämmstoffe sind beispielsweise mineralische Fasern, wie Steinwolle und Glaswolle oder auch Schäume wie Polyethylen oder Polystyrol gebräuchlich.

Bei einer alternativen bevorzugten Ausführungsform ist das eine oder die mehreren Wärmedämmelemente jeweils aus einem mit Luft oder Vakuum gefüllten Hohlraum gebildet, welcher im Grundkörper ausgebildet ist.

Das Wärmedämmelement ist bevorzugt durch eine Wärmedämmschicht gebildet, welche die dem zu umschließenden Raum zuzuwendende Fläche des Baukörpers überdeckt. Die Wärmedämmschicht kann segmentartig ausgebildet sein, um die erforderliche Statik des Baukörpers zu gewährleisten. Die Wärmedämmschicht kann aus einem Wärmedämmstoff oder auch aus Luft oder Vakuum bestehen, beispielsweise in Form einer hohlen Schicht. Aus statischen Gründen können für andere Ausführungsformen des erfindungsgemäßen Baukörpers anderer Ausführungen des einen oder der mehreren Wärmedämmelemente bevorzugt sein. Beispielsweise können die Wärmedämmelemente durch einzelne über die flächenhafte Ausdehnung des Baukörpers verteilte Wärmedämmkörper gebildet sein. Die Wärmedämmkörper können beispielsweise die Form von Quadern, Zylindern oder Kugeln besitzen.

Bei Ausführungsformen des erfindungsgemäßen Baukörpers mit einer Wärmedämmschicht als Wärmedämmelement durchstößt der eine oder die mehreren Akustikkörper bevorzugt die Wärmedämmschicht, um in einem hohen Maße zu gewährleisten, dass die Wärmedämmschicht über die Akustikkörper gegenüber dem zu umschließenden Raum akustisch wirksam werden.

Der erfindungsgemäße Baukörper ist bevorzugt als Deckenelement ausgebildet, wobei die eine oder die mehreren Aussparungen durch nach unten gerichtete Öffnungen gebildet sind. Das Deckenelement ist bevorzugt als thermisch aktiviertes Deckenelement ausgebildet, um den zu umschließenden Raum kühlen und erwärmen zu können.

Das im Deckenelement vorhandene Raumklimasystem umfasst bevorzugt Rohre zur Leitung eines kühlbaren und/oder erwärmbaren Mediums, welche das Deckenelement horizontal durchlaufen. In einfachsten Fall weist das erfindungsgemäße Deckenelement lediglich Rohre als Teil des Raumklimasystems auf, welche mit Rohren eines weiteren der erfindungsgemäßen Deckenelemente verbindbar sind.

Der eine oder die mehreren Akustikkörper sind auf ihren dem zu umschließenden Raum zuzuwendenden Seiten bevorzugt mit einem akustisch wirksamen Vlies bedeckt. Dabei steht das Vlies bevorzugt zumindest teilweise über die dem zu umschließenden Raum zuzuwendende Seite über, sodass ein Teil der Unterseite des Grundkörpers des Deckenelementes vom Vlies bedeckt wird. Bevorzugt steht das Vlies umlaufend über die dem zu umschließenden Raum zuzuwendende Seite des Akustikkörpers über, sodass das Vlies mit der Unterseite des Grundkörpers des Deckenelementes abschließt. Bei dieser Ausführungsform des erfindungsgemäßen Baukörpers werden Probleme verhindert, welche beim Einsetzen von verdrängenden Körpern in den Grundkörper aus Beton entstehen können. Insbesondere sollen das so genannte Ausbluten der Betonkanten am Übergang zum Akustikkörper und die Neigung zur Rissbildung entlang des eingeführten Akustikkörpers vermieden werden. Auch sollen optisch ästhetische Anforderungen erfüllt werden, welche an die eingeführten Akustikkörper gestellt werden, ohne dass eine aufwändige Nachbearbeitung erforderlich ist. Der Überstand des Vlieses über die dem zu umschließenden Raum zuzuwendende Seite des Akustikkörpers führt dazu, dass ggf. aus dem Grundkörper auslaufende Zementmilch vom Vlies aufgenommen wird und sich beim Abbinden verhärtet, sodass ein dauerhafter und belastbarer Übergang vom Akustikkörper zum Grundkörper geschaffen wird. Auch wirkt das Vlies rissüberbrückend, wodurch die Verwendungseigenschaften des Deckenelementes verbessert werden.

Der Akustikkörper besteht bevorzugt aus einem akustisch wirksamen Material, wie beispielsweise einem Schaum, ein Gewebe, ein Gewirke oder ein Gewölle. Alternativ oder ergänzend weist der Akustikkörper auf seiner dem zu umschließenden Raum zuzuwendenden Seite bevorzugt ein Gitter, eine Lochplatte, eine Schlitzplatte, eine Membran und/oder einen Ventilator auf. Alternativ kann der Akustikkörper auch durch eine poröse Struktur oder auch durch die zylinderförmigen Hohlräume eines Ziegelsteins gebildet sein.

Der Akustikkörper besitzt auf seiner dem zu umschließenden Raum zuzuwendenden Seite bevorzugt eine schallreflektierende Oberfläche, eine schallabsorbierende Oberfläche und/oder eine schalldiffundierende Oberfläche.

Bei einer besonderen Ausführungsform des erfindungsgemäßen Baukörpers ist der Akustikkörper auf seiner dem zu umschließenden Raum zuzuwendenden Seite mit einem Akustikputz überzogen. Auch der Grundkörper kann auf seiner dem zu umschließenden Raum zuzuwendenden Seite mit dem Akustikputz überzogen sein.

Bei einer weiteren bevorzugten Ausführungsform des erfindungsgemäßen Baukörpers weist dieser mehrere der Wärmedämmelemente auf, wobei die Wärmedämmelemente jeweils über einen der Akustikkörper gegenüber über dem zu umschließenden Raum akustisch wirksam sind. Die mehreren Akustikkörper sind bevorzugt miteinander akustisch verbunden, d. h. sie sind akustisch aneinander gekoppelt, um gemeinsam akustisch aktiv sein zu können. Hierdurch ist die Wirkung der einzelnen Akustikkörper zur Beeinflussung der akustischen Eigenschaften deutlich erhöht. Die Verbindungen der einzelnen Akustikkörper sind innerhalb des Grundkörpers ausgebildet. Hierdurch müssen die den zu umschließenden Raum zuzuwendenden Flächen der Akustikkörper nicht vergrößert ausgeführt werden. Eine andere Möglichkeit des Verbindens der Akustikkörper besteht darin, dass die Akustikkörper die Wärmedämmschicht berühren oder durchstoßen, wodurch die Akustikkörper über die Wärmedämmschicht akustisch gekoppelt sind.

Das eine oder die mehreren Wärmedämmelemente bestehen bevorzugt aus einem akustisch wirksamen Material, um eine hohe akustische Wirksamkeit der Wärmedämmelemente gegenüber dem zu umschließenden Raum zu gewährleisten.

Weitere Vorteile, Einzelheiten und Weiterbildungen der Erfindung ergeben sich aus der nachfolgenden Beschreibung mehrere Ausführungsformen, unter Bezugnahme auf die Zeichnung. Es zeigen:
- Fig. 1:: eine erste bevorzugte Ausführungsform eines erfindungsgemäßen Deckenelementes;
- Fig. 2:: mehrere Ausführungsformen eines Akustikkörpers in einem erfindungsgemäßen Deckenelement;
- Fig. 3:: weitere Ausführungsformen des Akustikkörpers in einem erfindungsgemäßen Deckenelement;
- Fig. 4:: eine weitere Gruppe Ausführungsformen des Akustikkörpers in einem erfindungsgemäßen Deckenelement;
- Fig. 5:: einer der in den Fig. 2 bis 4 gezeigten Akustikkörper in Alleinstellung;
- Fig. 6:: eine weitere Ausführungsform des Akustikkörpers in Alleinstellung;
- Fig. 7:: eine weitere Ausführungsform eines erfindungsgemäßen Baukörpers mit einem eingeführten Akustikkörper;
- Fig. 8:: eine zweite bevorzugte Ausführungsform des erfindungsgemäßen Deckenelementes;
- Fig. 9:: eine dritte bevorzugte Ausführungsform des erfindungsgemäßen Deckenelementes mit Deckensteinen; und
- Fig. 10:: einer der in Fig. 9 gezeigten Deckensteine in Alleinstellung.

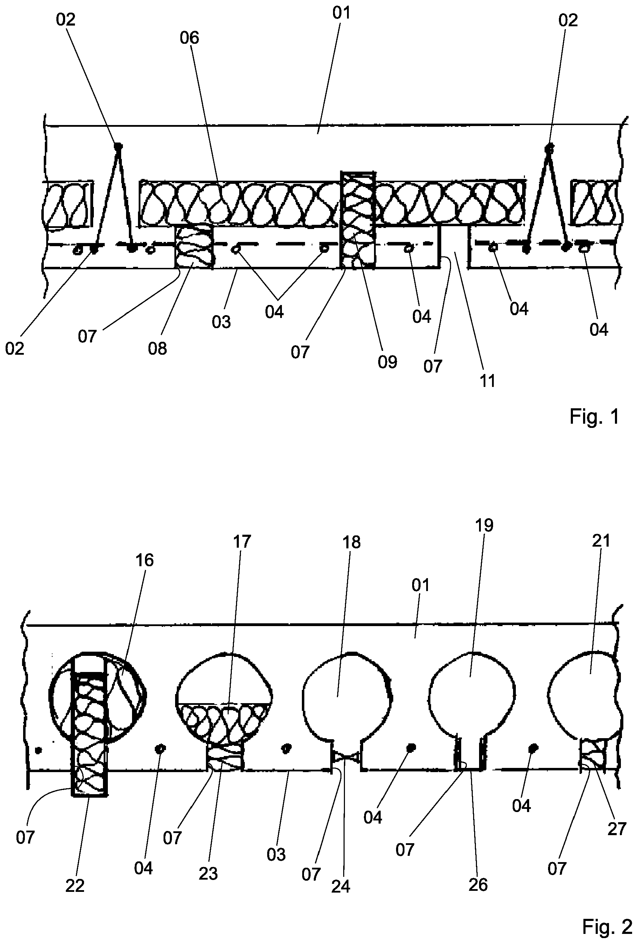

Fig. 1 zeigt eine erste bevorzugte Ausführungsform eines erfindungsgemäßen Baukörpers, welcher als Deckenelement ausgebildet ist. Das Deckenelement umfasst zunächst einen Grundkörper 01 aus Beton, welcher durch Stahlbewehrungen 02 verstärkt ist. In der Nähe einer Unterseite 03 des Deckenelementes sind durch den Grundkörper 01 mehrere Rohre 04 eines Raumklimasystems verlegt. Durch die Rohre 04 strömt während des Betriebes des Raumklimasystems Wasser, welches je nach Anforderung gekühlt oder erwärmt ist, um den unter der Unterseite 03 des Deckenelementes befindlichen Raum zu kühlen oder zu erwärmen. Um zu gewährleisten, dass die von den Rohren 04 des Raumklimasystems transportierte Wärme weitgehend in den Raum unterhalb der Unterseite 03 des Deckenelementes transportiert bzw. aus diesem Raum heraustransportiert wird, befindet sich im Grundkörper 01 eine Wärmedämmschicht 06 oberhalb der Rohre 04. Die Wärmedämmschicht 06 besteht aus einem Wärmedämmstoff in einem Hohlraum, welcher sich horizontal im Grundkörper 01 erstreckt. Die Wärmedämmschicht 06 ist an denjenigen Positionen im Grundkörper 01 unterbrochen, in welchem die Stahlbewertung 02 vertikal verläuft. In einer Aussparung 07, welche sich vertikal von der Unterseite 03 bis zur Wärmedämmschicht 06 erstreckt, ist ein erster Akustikkörper 08 eingeführt, welcher die Aussparung 07 vollständig ausfüllt. Durch das vollständige Ausfüllen der Aussparung 07 durch den ersten Akustikkörper 08 schließt der erste Akustikkörper 08 oberflächenbündig mit der Unterseite 03 des Deckenelementes ab. Da die Aussparung 07 bis zur Wärmedämmschicht 06 reicht, berührt der erste Akustikkörper 08 die Wärmedämmschicht 06. Hierdurch wird die Wärmedämmschicht 06 ebenfalls gegenüber dem Raum unterhalb der Unterseite 03 akustisch wirksam.

In einer weiteren der Ausnehmungen 07 befindet sich ein zweiter Akustikkörper 09, welcher die Aussparung 07 in gleicher Weise wie der erste Akustikkörper 08 die entsprechende Aussparung 07 ausfüllt. Im Gegensatz zum ersten Akustikkörper 08 durchstößt der zweite Akustikkörper 09 die Wärmedämmschicht 06, sodass die Fläche, entlang welcher sich der zweite Akustikkörper 09 und die Wärmedämmschicht 06 berühren, vergrößert ist, sodass die Wärmedämmschicht 06 in einem erhöhten Maße über den zweiten Akustikkörper 09 gegenüber dem Raum unterhalb der Unterseite 03 des Deckenelementes akustisch wirksam wird.

In einer weiteren der Ausnehmungen 07 befindet sich ein dritter Akustikkörper 11, welcher im Gegensatz zu dem ersten Akustikkörper 08 und zu dem zweiten Akustikkörper 09 nicht aus einem besonderen Akustikmaterial besteht, sondern durch die die Ausnehmung 07 ausfüllende Luft gebildet ist.

Fig. 2 zeigt mehrere Ausführungsformen von Akustikkörpern in einem erfindungsgemäßen Deckenelement. Das Deckenelement umfasst ebenso wie das in Fig. 1 gezeigte Deckenelement den Grundkörper 01 aus Beton. In dem Grundkörper 01 sind ein erstes Wärmedämmelement 16, ein zweites Wärmedämmelement 17, ein drittes Wärmedämmelement 18, ein viertes Wärmedämmelement 19 und ein fünftes Wärmedämmelement 21 angeordnet, welche in kugel- oder zylinderförmigen Hohlräumen des Grundkörpers 01 ausgebildet sind. Diese Hohlräume führen zu einer Einschnürung des Wärmeenergiestroms im Grundkörper und stellen damit bereits selbst ein Wärmedämmelement dar. Die drüber hinaus vorgesehenen gesonderten Wärmedämmelemente 16, 17, 18, 19, 21 sind in gleicher Weise wie die in Fig. 1 gezeigte Wärmedämmschicht 06 durch die Ausnehmungen 07 mit dem unter der Unterseite 03 befindlichen Raum verbunden. Das erste Wärmedämmelement 16 besteht aus einem Wärmedämmstoff, welcher den Hohlraum im Grundkörper 01 fast vollständig ausfüllt. In der zum ersten Wärmedämmelement 16 führenden Aussparung 07 ist ein zylinderförmiger vierter Akustikkörper 22 eingeführt, welcher das erste Wärmedämmelement 16 diametral durchstößt. Der vierte Akustikkörper 22 steht auf der Unterseite 03 des Deckenelementes über. Das zweite Wärmedämmelement 17 ist durch einen Wärmedämmstoff gebildet, welcher den Hohlraum etwa zur Hälfte ausfüllt. In der zum zweiten Wärmedämmelement 17 führenden Aussparung 07 befindet sich ein fünfter Akustikkörper 23, welcher die Aussparung 07 vollständig ausfüllt und das zweite Wärmedämmelement 17 berührt. Das dritte Wärmedämmelement 18, das vierte Wärmedämmelement 19 und das fünfte Wärmedämmelement 21 bestehen jeweils aus Luft in dem jeweiligen Hohlraum. In der zum dritten Wärmedämmelement 18 führenden Aussparung 07 befindet sich ein sechster Akustikkörper 24 in Form eines Ventilators. Der Ventilator 24 dient der Absorption von Schall, welcher in dem Raum unterhalb der Unterseite 03 des Deckenelementes vorhanden ist. Gleichzeitig kann der Ventilator 24 gemäß einer nicht gezeigten Ausführungsform der Erfindung dazu dienen, Wärme vom Raum unter der Unterseite 03 des Deckenelementes zum Raumklimasystem bzw. umgekehrt zu übertragen. Gemäß einer weiteren nicht gezeigten Ausführungsform der Erfindung bildet ein vorhandenes Belüftungssystem einen Teil oder ein Ganzes des Akustikkörpers. In der zum vierten Wärmedämmelement 19 führenden Aussparung 07 befindet sich ein siebter Akustikkörper 26 in Form einer Membran. Die Membran 26 korrespondiert mit der Luft des vierten Wärmedämmelementes 19, wodurch der auf die Membran 26 aus dem Raum unter der Unterseite des Deckenelementes einwirkende Schall absorbiert wird. In der zum fünften Wärmedämmelement 21 führenden Aussparung 07 befindet sich ein achter Akustikkörper 27, welcher die Aussparung 07 vollständig ausfüllt und aus einem akustisch wirksamen Material besteht. Der achte Akustikkörper 27 begrenzt auf seiner Oberseite das Volumen des fünften Wärmedämmelements 21, wodurch er mit der Luft des fünften Wärmedämmelements 21 akustisch gekoppelt ist.

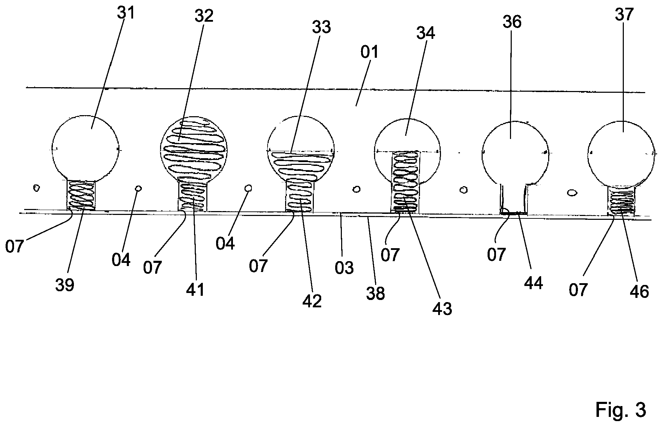

Fig. 3 zeigt weitere Ausführungsformen des Akustikkörpers in dem erfindungsgemäßen Deckenelement. Der Grundkörper 01 des Deckenelementes ist in gleicher Weise wie der Grundkörper 01 des in Fig. 2 gezeigten Deckenelementes aufgebaut. Im Deckenelement sind ein sechstes Wärmedämmelement 31, ein siebtes Wärmedämmelement 32, ein achtes Wärmedämmelement 33, ein neuntes Wärmedämmelement 34, ein zehntes Wärmedämmelement 36 und ein elftes Wärmedämmelement 37 angeordnet. Die Wärmedämmelemente 31, 32, 33, 34, 36, 37 befinden sich wiederum in kugel- bzw. zylinderförmigen Hohlräumen im Grundkörper 01. Die die Wärmedämmelemente 31, 32, 33, 34, 36, 37 einfassenden Hohlräume sind in gleicher Weise wie bei dem in Fig. 2 gezeigten Deckenelement über die Aussparungen 07 mit der Unterseite 03 des Deckenelementes verbunden. Im Gegensatz zu der in Fig. 2 gezeigten Ausführungsform ist bei der in Fig. 3 gezeigten Ausführungsform auf die Unterseite 03 ein Akustikspachtel 38 bzw. ein Akustikputz flächendeckend aufgebracht. Das sechste Wärmedämmelement 31, das zehnte Wärmedämmelement 36 und das elfte Wärmedämmelement 37 bestehen aus Luft, welche sich in dem jeweiligen Hohlraum befindet. Das siebte Wärmedämmelement 32 besteht aus einem Wärmedämmstoff, welcher den entsprechenden Hohlraum vollständig ausfüllt. Das achte Wärmedämmelement 33 besteht aus einem Wärmedämmstoff, welcher den entsprechenden Hohlraum etwa zur Hälfte ausfüllt. In der zum sechsten Wärmedämmelement 31 führenden Aussparung 07 befindet sich ein neunter Akustikkörper 39, welcher in gleicher Weise wie der in Fig. 2 gezeigte achte Akustikkörper 27 aufgebaut ist. In der zum siebten Wärmedämmelement 32 führenden Aussparung 07 befindet sich ein zehnter Akustikkörper 41, welcher in gleicher Weise wie der in Fig. 2 gezeigte fünfte Akustikkörper 23 aufgebaut ist. In der zum achten Wärmedämmelement 33 führenden Aussparung 07 befindet sich ein elfter Akustikkörper 42, welcher dem in Fig. 2 gezeigten fünften Akustikkörper 23 gleicht. In der zum neunten Wärmedämmelement 34 führenden Aussparung 07 befindet sich ein zwölfter Akustikkörper 43, welcher dem in Fig. 2 gezeigten vierten Akustikkörper 22 gleicht, jedoch keinen festen Dämmstoff durchstößt, sondern in die das neunte Wärmedämmelement 34 bildende Luft hineinragt. In der zum zehnten Wärmedämmelement 36 führenden Aussparung 07 befindet sich ein dreizehnter Akustikkörper 44 in Form einer Membran, welche dem in Fig. 2 gezeigten siebten Akustikkörper 26 gleicht. In der zum elften Wärmedämmelement 37 führenden Aussparung 07 befindet sich ein vierzehnter Akustikkörper 46, welcher zunächst dem neunten Akustikkörper 39 gleicht. Zusätzlich befinden sich in dem vierzehnten Akustikkörper 46 vertikale Löcher (nicht gezeigt), welche die akustische Kopplung des Wärmedämmelementes 37 an den Raum unterhalb der Unterseite 03 des Deckenelementes verbessern.

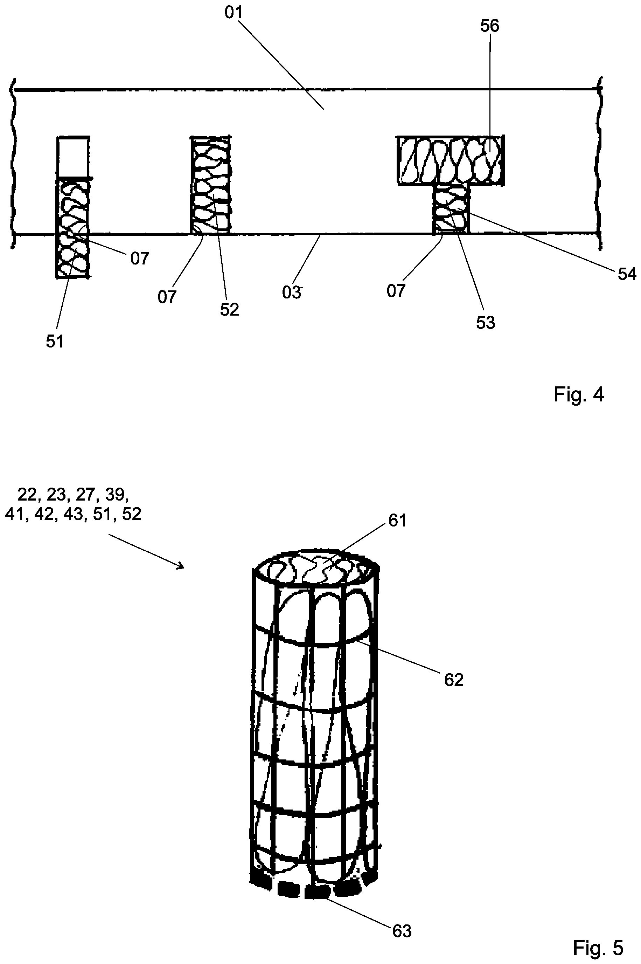

Fig. 4 zeigt eine weitere Gruppe an Ausführungen des Akustikkörpers im erfindungsgemäßen Deckenelement. Ein fünfzehnter Akustikkörper 51, ein sechzehnter Akustikkörper 52 und ein siebzehnter Akustikkörper 53 befinden sich in gleicher Weise wie bei dem in Fig. 2 gezeigten Deckenelement in den Aussparungen 07. Der fünfzehnte Akustikkörper 51, der sechzehnte Akustikkörper 52 und der siebzehnte Akustikkörper 53 bestehen jeweils aus einem Akustikmaterial, welches in die entsprechende Aussparung 07 eingeführt ist. Der fünfzehnte Akustikkörper 51 und der sechzehnte Akustikkörper 52 weisen die Form eines Zylinders auf. Während der fünfzehnte Akustikkörper 51 etwa bis zur Hälfte in die entsprechende Aussparung 07 eingeführt ist, ist der sechzehnte Akustikkörper 52 vollständig in die entsprechende Aussparung 07 eingeführt, sodass er mit der Oberfläche der Unterseite 03 des Deckenelementes abschließt. Der siebzehnte Akustikkörper 53 umfasst einen vertikalen Teilkörper 54 und einen horizontalen Teilkörper 56. Der horizontale Teilkörper 56 ist über den vertikalen Teilkörper 54 gegenüber dem unter der Unterseite 03 befindlichen Raum akustisch wirksam, sodass die akustische Wirksamkeit im Vergleich zum fünfzehnten Akustikkörper 51 und zum sechzehnten Akustikkörper 52 erhöht ist, ohne dass die Aussparung 07 vergrößert sein muss.

Fig. 5 zeigt einen der in den Fig. 2 bis 4 gezeigten Akustikkörper 22, 23, 27, 39, 41, 42, 43, 51, 52 in Alleinstellung. Der Akustikkörper 22, 23, 27, 39, 41, 42, 43, 51, 52 weist die Form eines Zylinders auf, welcher durch ein akustisch wirksames Material 61 ausgefüllt ist. Das akustisch wirksame Material 61 ist durch ein Drahtgeflecht 62 umhüllt, welches die Form eines Zylindermantels hat. Auf der Unterseite des akustisch wirksamen Materials 61 befindet sich eine Lochplatte 63.

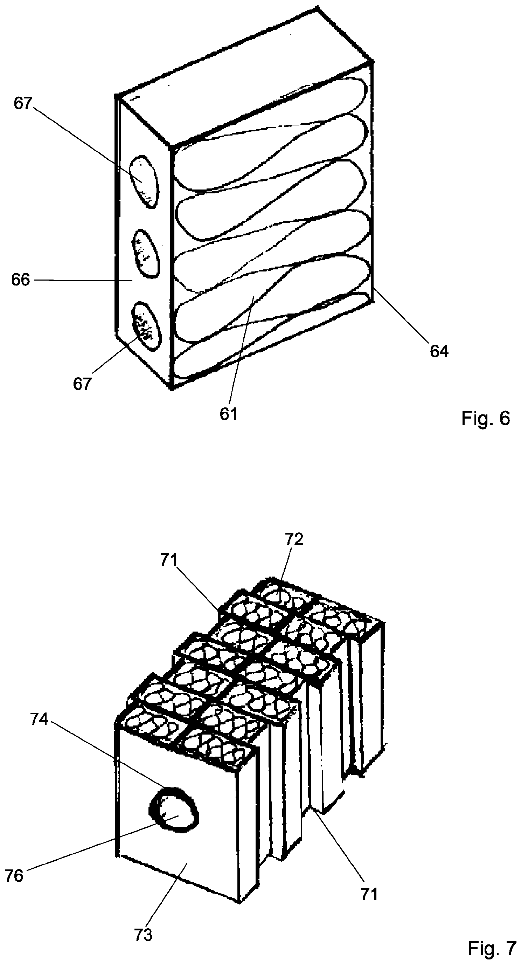

Fig. 6 zeigt eine weitere Ausführungsform eines Akustikkörpers gemäß der Erfindung in Alleinstellung. Der gezeigte Akustikkörper weist die Form eines Quaders auf, welcher mit dem akustisch wirksamen Material 61 gefüllt ist. Das akustisch wirksame Material 61 wird durch ein Gehäuse 64 eingefasst. Das Gehäuse 64 weist die Form einer Quaderoberfläche auf. Auf einer dem zu umschließenden Raum zuzuwendenden Seite 66 weist das Gehäuse 64 Öffnungen 67 auf, über welche das akustisch wirksame Material 61 gegenüber dem zu umschließenden Raum akustisch wirksam wird.

Fig. 7 zeigt eine besondere Ausführungsform des erfindungsgemäßen Baukörpers in Form eines Mauerwerksteines. Der Mauerwerkstein weist auf zwei Seiten ein Profil 71 auf, um mit weiteren Mauerwerksteinen verzahnt werden zu können. Der Mauerwerkstein ist mit einem Wärmedämmstoff 72 gefüllt, um dort ein Wärmedämmelement auszubilden. Auf einer dem zu umschließenden Raum zuzuwendenden Seite 73 des Mauerwerksteines ist eine Öffnung 74 eingebracht, in welche ein Akustikkörper 76 eingeführt ist. Der Akustikkörper 76 ist in gleicher Weise wie der in Fig. 5 gezeigte Akustikkörper aufgebaut und durchstößt den Wärmedämmstoff 72.

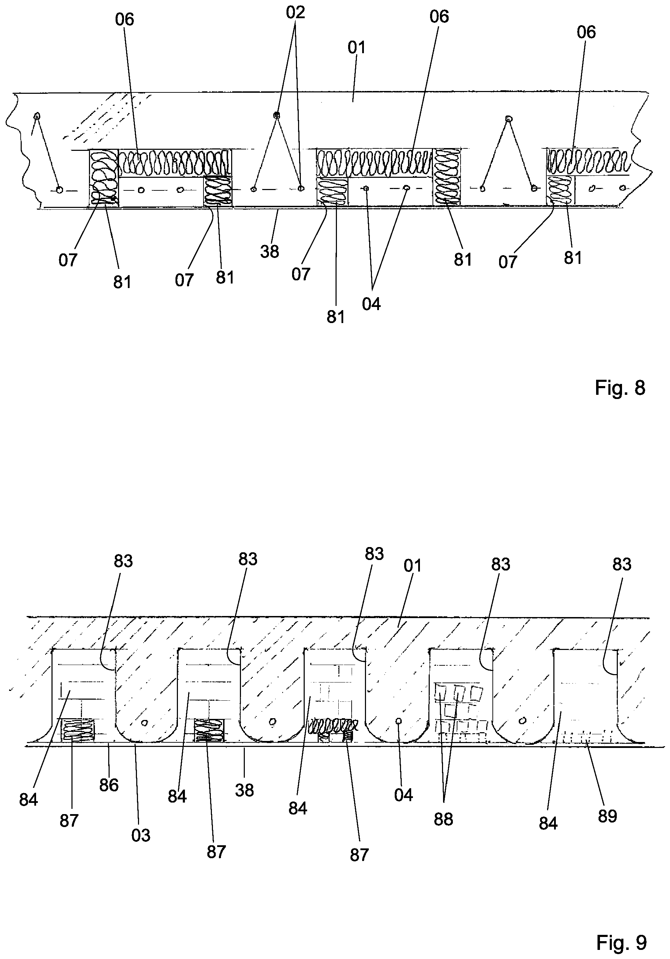

Fig. 8 zeigt eine zweite bevorzugte Ausführungsform des erfindungsgemäßen Deckenelementes. In gleicher Weise wie die in Fig. 1 gezeigte Ausführungsform umfasst die in Fig. 8 gezeigte Ausführungsform den Grundkörper 01, die Stahlbewährungen 02, die Rohre 04 und die Aussparungen 07. Im Gegensatz zu der in Fig. 1 gezeigten Ausführungsform ist die Wärmedämmschicht 06 segmentartig über den Rohren 04 ausgebildet. In den Aussparungen 07 befinden sich Akustikkörper 81, welche alternierend die Wärmedämmschicht 06 berühren oder durchstoßen. Die Akustikkörper 81 sind an den Rändern der Segmente der Wärmedämmschicht 06 angeordnet, sodass die Akustikkörper 81 mit dem entsprechenden Segment der Wärmedämmschicht 06 jeweils zwei der Rohre 04 im Querschnitt U-förmig umschließen. Hierdurch sind gleichzeitig eine effektive Wärmedämmung und eine hohe akustische Wirksamkeit der Wärmedämmschicht 06 mit den Akustikkörpern 81 gegeben.

Fig. 9 zeigt eine dritte bevorzugte Ausführungsform des erfindungsgemäßen Deckenelementes. Die gezeigte Ausführungsform umfasst wie die in Fig. 1 gezeigte Ausführungsform den Grundkörper 01, in welchem sich die Rohre 04 befinden. Im Gegensatz zu der in Fig. 1 gezeigten Ausführungsform weist die in Fig. 9 gezeigte Ausführungsform tiefe Nuten 83 auf, in welche Deckensteine 84 eingeführt sind. Unterseiten 86 der Deckensteine 84 bilden fast vollständig die Unterseite 03 des Deckenelementes, die wiederum mit dem Akustikspachtel 38 bedeckt ist. Die Deckensteine 84 sind wahlweise mit einem akustisch wirksamen Material 87 gefüllt, oder weisen in ihrem Inneren mehrere Hohlräume 88 auf, oder besitzen an ihrer Unterseite eine Lochplatte 89. Weiterhin bestehen die Deckensteine 84 insbesondere in einem oberen Bereich aus einem thermisch isolierenden Material, sodass sie ebenfalls Wärmedämmelemente ausbilden.

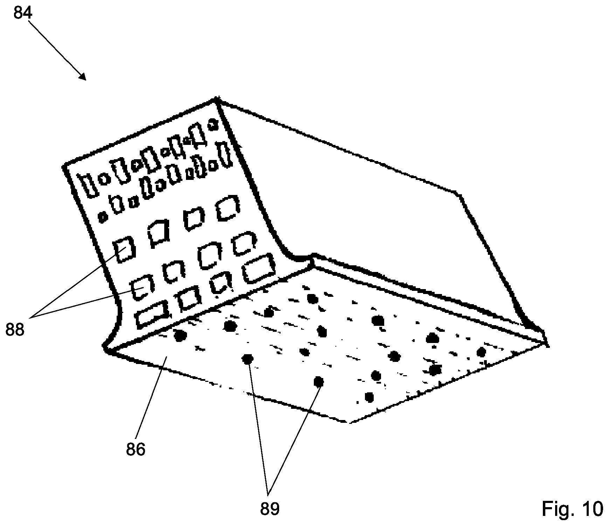

Fig. 10 zeigt einen der in Fig. 9 gezeigten Deckensteine 84 in Alleinstellung. Der Deckenstein 84 weist in seinem Inneren die Hohlräume 88 und an seiner Unterseite 86 die Lochplatte 89 auf.

### Bezugszeichenliste

- 01: Grundkörper
- 02: Stahlbewehrung
- 03: Unterseite
- 04: Rohre
- 05: -
- 06: Wärmedämmschicht
- 07: Aussparungen
- 08: erster Akustikkörper
- 09: zweiter Akustikkörper
- 10: -
- 11: dritter Akustikkörper
- 12: -
- 16: erstes Wärmedämmelement
- 17: zweites Wärmedämmelement
- 18: drittes Wärmedämmelement
- 19: viertes Wärmedämmelement
- 20: -
- 21: fünftes Wärmedämmelement
- 22: vierter Akustikkörper
- 23: fünfter Akustikkörper
- 24: Ventilator
- 25: -
- 26: Membran
- 27: achter Akustikkörper
- 31: sechstes Wärmedämmelement
- 32: siebtes Wärmedämmelement
- 33: achtes Wärmedämmelement
- 34: neuntes Wärmedämmelement
- 35: -
- 36: zehntes Wärmedämmelement
- 37: elftes Wärmedämmelement
- 38: Akustikspachtel
- 39: neunter Akustikkörper
- 40: -
- 41: zehnter Akustikkörper
- 42: elfter Akustikkörper
- 43: zwölfter Akustikkörper
- 44: Membran
- 45: -
- 46: vierzehnter Akustikkörper
- 51: fünfzehnter Akustikkörper
- 52: sechzehnter Akustikkörper
- 53: siebzehnter Akustikkörper
- 54: vertikaler Teilkörper
- 55: -
- 56: horizontaler Teilkörper
- 61: akustisch wirksames Material
- 62: Drahtgeflecht
- 63: Lochplatte
- 64: Gehäuse
- 66: Seite
- 67: Öffnungen
- 71: Profil
- 72: Wärmedämmstoff
- 73: Seite
- 74: Öffnung
- 76: Akustikkörper
- 81: Akustikkörper
- 83: Nuten
- 84: Deckensteine
- 86: Unterseite
- 87: akustisches Material
- 88: Hohlräume
- 89: Lochplatte

## Patentansprüche

1. Baukörper zur Umschließung eines Raumes, umfassend:
- einen Grundkörper (01), welcher durch Stahlbewehrungen (02) verstärkt ist, zur Ausbildung einer räumlichen Begrenzung;
- ein im Grundkörper (01) angeordnetes Raumklimasystem (04) zum Heizen und/oder Kühlen des zu umschließenden Raumes;
- mindestens ein innerhalb des Grundkörpers (01) angeordnetes Wärmedämmelement (06; 16-19; 21; 31-34; 36; 37; 72; 84), wobei das Raumklimasystem (04) zwischen dem Wärmedämmelement (06; 16-19; 21; 31-34; 36; 37; 72; 84) und dem zu umschließenden Raum angeordnet ist; und
- einen Akustikkörper (08; 09; 11; 22-24; 26; 27; 39; 41-44; 46; 51-53; 76; 81) aus einem Akustikmaterial, welches die Nachhallzeit im zu umschließenden Raum verringert, wobei der Akustikkörper in eine Aussparung (07) im Grundkörper (01) eingeführt ist;
wobei das Wärmedämmelement (06; 16-19; 21; 31-34; 36; 37; 72; 84) über den Akustikkörper (08; 09; 11; 22-24; 26; 27; 39; 41-44; 46; 51-53; 76; 81) gegenüber dem zu umschließenden Raum akustisch wirksam ist.

2. Baukörper nach Anspruch 1, **dadurch gekennzeichnet, dass** das Wärmedämmelement (06; 16-19; 21; 31-34; 36; 37; 72; 84) und der Akustikkörper (08; 09; 11; 22-24; 26; 27; 39; 41-44; 46; 51-53; 76; 81) sich berühren, um die akustische Wirksamkeit des Wärmedämmelementes (06; 16-19; 21; 31-34; 36; 37; 72; 84) gegenüber dem zu umschließenden Raum zu bewirken.

3. Baukörper nach Anspruch 2, **dadurch gekennzeichnet, dass** das Wärmedämmelement (06; 16; 17; 32; 33; 72) aus einem Wärmedämmstoff besteht.

4. Baukörper nach Anspruch 2, **dadurch gekennzeichnet, dass** das Wärmedämmelement (18; 19; 21; 31; 34; 36; 37) aus einem mit Luft oder Vakuum gefüllten Hohlraum im Grundkörper (01) gebildet ist.

5. Baukörper nach einem der Ansprüche 1 bis 4, **dadurch gekennzeichnet, dass** er mehrere der Wärmedämmelemente und mehrere der Akustikkörper umfasst, wobei die Wärmedämmelemente jeweils über einen der Akustikkörper gegenüber dem zu umschließenden Raum akustisch wirksam sind, und wobei die mehreren Akustikkörper akustisch miteinander verbunden sind.

6. Baukörper nach einem der Ansprüche 1 bis 4, **dadurch gekennzeichnet, dass** das Wärmedämmelement durch eine Wärmedämmschicht (06) gebildet ist.

7. Baukörper nach Anspruch 6, **dadurch gekennzeichnet, dass** der Akustikkörper (09; 81) die Wärmedämmschicht (06) durchstößt.

8. Baukörper nach einem der Ansprüche 1 bis 7, **dadurch gekennzeichnet, dass** er als thermisch aktiviertes Deckenelement ausgebildet ist, wobei die Aussparung (07) durch eine nach unten gerichtete Öffnung gebildet ist.

9. Baukörper nach Anspruch 8, **dadurch gekennzeichnet, dass** das Raumklimasystem mehrere Rohre (04) zur Leitung eines kühlbaren und/oder erwärmbaren Mediums umfasst, welche das Deckenelement horizontal durchlaufen.

10. Baukörper nach Anspruch 8 oder 9, **dadurch gekennzeichnet, dass** der Akustikkörper (08; 09; 11; 22-24; 26; 27; 39; 41-44; 46; 51-53; 76; 81) auf seiner dem zu umschließenden Raum zuzuwendenden Seite mit einem akustisch wirksamen Vlies bedeckt ist, welches zumindest teilweise über die dem zu umschließenden Raum zuzuwendende Seite übersteht und einen Teil der Unterseite (03) des Grundkörpers (01) des Deckenelementes bedeckt.

11. Baukörper nach einem der Ansprüche 1 bis 10, **dadurch gekennzeichnet, dass** der Akustikkörper (22-24; 26; 27; 39; 41-44; 46; 51-53; 76) auf seiner dem zu umschließenden Raum zuzuwendenden Seite (86) ein Gitter, eine Lochplatte (63; 89), eine Schlitzplatte, eine Membran (26; 44) oder einen Ventilator (24) aufweist.

12. Baukörper nach einem der Ansprüche 1 bis 11, **dadurch gekennzeichnet, dass** der Akustikkörper (39; 41-44; 46; 81) auf seiner dem zu umschließenden Raum zuzuwendenden Seite mit einem Akustikputz (38) überzogen ist.

## Claims

1. A building structure for enclosing a room, comprising:
- a base body (01), which is reinforced by steel reinforcements (02), for constructing a spatial boundary;
- an air-conditioning system (04) arranged in the base body (01) for heating and/or cooling the room to be enclosed;
- at least one thermal insulation element (06; 16-19; 21; 31-34; 36; 37; 72; 84) arranged inside the base body (01), wherein the air-conditioning system (04) is arranged between the thermal insulation element (06; 16-19; 21; 31-34; 36; 37; 72; 84) and the room to be enclosed; and
- an acoustic body (08; 09; 11; 22-24; 26; 27; 39; 41-44; 46; 51-53; 76; 81) made up of an acoustic material, which reduces the reverberation time in the room to be enclosed, wherein the acoustic body is introduced into a recess (07) in the base body (01);
wherein the heat insulation element (06; 16-19; 21; 31-34; 36; 37; 72; 84) is acoustically effective by means of the acoustic body (08; 09; 11; 22-24; 26; 27; 39; 41-44; 46; 51-53; 76; 81) with respect to the room to be enclosed.

2. The building structure according to Claim 1, **characterized in that** the thermal insulation element (06; 16-19; 21; 31-34; 36; 37; 72; 84) and the acoustic body (08; 09; 11; 22-24; 26; 27; 39; 41-44; 46; 51-53; 76; 81) touch, in order to effect the acoustic effectiveness of the thermal insulation element (06; 16-19; 21; 31-34; 36; 37; 72; 84) with respect to the room to be enclosed.

3. The building structure according to Claim 2, **characterized in that** the thermal insulation element (06; 16; 17; 32; 33; 72) consists of a heat-insulating material.

4. The building structure according to Claim 2, **characterized in that** the thermal insulation element (18; 19; 21; 31; 34; 36; 37) is formed from a cavity in the base body (01) filled with air or vacuum.

5. The building structure according to one of Claims 1 to 4, **characterized in that** the building structure comprises a plurality of thermal insulation elements and a plurality of acoustic bodies, wherein the thermal insulation elements are in each case acoustically effective with respect to the room to be enclosed via one of the acoustic bodies, and wherein the plurality of acoustic bodies are acoustically connected to one another.

6. The building structure according to one of Claims 1 to 4, **characterized in that** the thermal insulation element is formed by a thermal insulation layer (06).

7. The building structure according to Claim 6, **characterized in that** the acoustic body (09; 81) penetrates the heat insulation layer (06).

8. The building structure according to one of Claims 1 to 7, **characterized in that** the building structure is constructed as a thermally active ceiling element, wherein the recess (07) is formed by a downwardly directed opening.

9. The building structure according to Claim 8, **characterized in that** the air-conditioning system comprises a plurality of pipes (04) for conducting a coolable and/or heatable medium, which run horizontally through the ceiling element.

10. The building structure according to Claim 8 or 9, **characterized in that** the acoustic body (08; 09; 11; 22-24; 26; 27; 39; 41-44; 46; 51-53; 76; 81) is covered, on the side thereof to be turned towards the room to be enclosed, with an acoustically effective non-woven material, which at least partially projects beyond the side to be turned towards the room to be enclosed and covers a part of the underside (03) of the base body (01) of the ceiling element.

11. The building structure according to one of Claims 1 to 10, **characterized in that** the acoustic body (22-24; 26; 27; 39; 41-44; 46; 51-53; 76) has a grating, a perforated plate (63; 89), a slotted plate, a membrane (26; 44) or a ventilator (24) on the side (86) of the acoustic body to be turned towards the room to be enclosed.

12. The building structure according to one of Claims 1 to 11, **characterized in that** the acoustic body (39; 41-44; 46; 81) is covered with an acoustic plaster (38) on the side of the acoustic body to be turned towards the room to be enclosed.

## Revendications

1. Module de construction pour entourer une pièce, comprenant :
- un corps de base (01) renforcé par des armatures métalliques (02) pour la formation d'une délimitation spatiale ;
- un système de climatisation de pièce (04) disposé dans le corps de base (01) pour chauffer et/ou refroidir la pièce à entourer ;
- au moins un élément d'isolation thermique (06 ; 16-19 ; 21 ; 31-34 ; 36 ; 37 ; 72 ; 84) disposé à l'intérieur du corps de base (01), dans lequel le système de climatisation de pièce (04) est disposé entre l'élément d'isolation thermique (06 ; 16-19 ; 21 ; 31-34 ; 36 ; 37 ; 72 ; 84) et la pièce à entourer ; et
- un corps acoustique (08 ; 09 ; 11 ; 22-24 ; 26 ; 27 ; 39 ; 41-44 ; 46 ; 51-53 ; 76 ; 81) en un matériau acoustique, lequel réduit la durée de réverbération dans la pièce à entourer, dans lequel le corps acoustique est inséré dans un évidement (07) dans le corps de base (01) ;
dans lequel l'élément d'isolation thermique (06 ; 16-19 ; 21 ; 31-34 ; 36 ; 37 ; 72 ; 84) est efficace acoustiquement par rapport à la pièce à entourer via le corps acoustique (08 ; 09 ; 11 ; 22-24 ; 26 ; 27 ; 39 ; 41-44 ; 46 ; 51-53 ; 76 ; 81).

2. Module de construction selon la revendication 1, **caractérisé en ce que** l'élément d'isolation thermique (06 ; 16-19 ; 21 ; 31-34 ; 36 ; 37 ; 72 ; 84) et le corps acoustique (08 ; 09 ; 11 ; 22-24 ; 26 ; 27 ; 39 ; 41-44 ; 46 ; 51-53 ; 76 ; 81) se touchent pour produire l'efficacité acoustique de l'élément d'isolation thermique (06 ; 16-19 ; 21 ; 31-34 ; 36 ; 37 ; 72 ; 84) par rapport à la pièce à entourer.

3. Module de construction selon la revendication 2, **caractérisé en ce que** l'élément d'isolation thermique (06 ; 16 ; 17 ; 32 ; 33 ; 72) se compose d'un matériau d'isolation thermique.

4. Module de construction selon la revendication 2, **caractérisé en ce que** l'élément d'isolation thermique (18 ; 19 ; 21 ; 31 ; 34 ; 36 ; 37) est formé par un espace creux rempli par de l'air ou du vide dans le corps de base (01).

5. Module de construction selon l'une des revendications 1 à 4, **caractérisé en ce qu'**il comprend plusieurs des éléments d'isolation thermique et plusieurs des corps acoustiques, dans lequel les éléments d'isolation thermique sont efficaces acoustiquement par rapport à la pièce à entourer respectivement via l'un des corps acoustiques, et dans lequel ces plusieurs corps acoustiques sont reliés acoustiquement les uns aux autres.

6. Module de construction selon l'une des revendications 1 à 4, **caractérisé en ce que** l'élément d'isolation thermique est formé par une couche d'isolation thermique (06).

7. Module de construction selon la revendication 6, **caractérisé en ce que** le corps acoustique (09 ; 81) transperce la couche d'isolation thermique (06).

8. Module de construction selon l'une des revendications 1 à 7, **caractérisé en ce qu'**il est réalisé en tant qu'élément de plafond activé thermiquement, dans lequel l'évidement (07) est formé par une ouverture orientée vers le bas.

9. Module de construction selon la revendication 8, **caractérisé en ce que** le système de climatisation de pièce comprend plusieurs tuyaux (04) pour la conduction d'un milieu pouvant être refroidi et/ou chauffé, lesquels traversent l'élément de plafond horizontalement.

10. Module de construction selon la revendication 8 ou 9, **caractérisé en ce que** le corps acoustique (08 ; 09 ; 11 ; 22-24 ; 26 ; 27 ; 39 ; 41-44 ; 46 ; 51-53 ; 76 ; 81) est couvert d'un matériau non tissé acoustiquement efficace sur son côté à tourner vers la pièce à entourer, lequel dépasse au moins en partie du côté à tourner vers la pièce à entourer et recouvre une partie du dessous (03) du corps de base (01) de l'élément de plafond.

11. Module de construction selon l'une des revendications 1 à 10, **caractérisé en ce que** le corps acoustique (22-24 ; 26 ; 27 ; 39 ; 41-44 ; 46 ; 51-53 ; 76) présente, sur son côté (86) à tourner vers la pièce à entourer, une grille, une plaque à trous (63 ; 89), une plaque à fentes, une membrane (26 ; 44) ou un ventilateur (24).

12. Module de construction selon l'une des revendications 1 à 11, **caractérisé en ce que** le corps acoustique (39 ; 41-44 ; 46 ; 81) est enrobé d'un enduit acoustique (38) sur son côté à tourner vers la pièce à entourer.
